# EUROPEAN PATENT APPLICATION

(11) **EP 0 976 944 A1**
(43) Date of publication of application: **02.02.2000**
(21) Application number: 97912531.7
(22) Date of filing: 20.11.1997
(51) Int. Cl.: F16D 65/08, F16D 51/20

(54) **DRUM BRAKE FOR VEHICLES**

(30) Priority: 22.04.1997 JP 11886397
(71) Applicant: TOKYO BUHIN KOGYO CO., LTD., Kanagawa 242 (JP)
(72) Inventor: OKADA, Norihisa, Kamakura-City, Kanagawa 247 (JP); MORIYA, Takeo, TokYo 194-01 (JP)
(74) Representative: Valentine, Francis Anthony Brinsley
(86) International application number: JP9704245
(87) International publication number: WO9848192

(57) **Abstract**

A drum brake for vehicles which applies a brake by pressing a pair of brake shoes having the same size on the inner surface of a brake drum, wherein the pair of brake shoes are made of materials having mutually different natural frequencies. Alternatively, the natural frequency of a trailing shoe may be greater than the natural frequency of a leading shoe. Furthermore, the main body of the leading shoe of the pair of shoes may be made of a steel sheet whereas the main body of the trailing shoe may be made of a cast iron. In the first and second inventions described above, coupled vibration is difficult to occur at the time of braking and the chance of the occurrence of "screeching" becomes extremely small. In the third invention described above, the coupled vibration is difficult to occur in the same way as in the second invention, and not only the chance of the occurrence of "screeching" becomes small but the vibration of the steel sheet shoe can be effectively suppressed by the drum itself and through the drum when the resonance with the brake drum occurs on the side of the steel sheet shoe of the leading shoe because the cast iron shoe of the trailing shoe has large damping force, a large specific gravity and a large weight due to its characteristics. Further, this drum brake can be produced in the same way as ordinary brake shoes by merely changing the shoe material.

## Description

### BACKGROUND OF THE INVENTION

### FIELD OF THE INVENTION

The present invention relates to a drum brake for a vehicle, and particularly to a drum brake for a vehicle provided with a "squeal" prevention mechanism.

### RELATED ART

In a drum brake for a vehicle, various kinds of researches have been conventionally performed with respect to a noise generated at a time of braking, so-called "squeal", and many inventions have been provided for preventing "squeal", however, these measures are employed to each of the brake drum, the brake shoe and the like, for example, a rigidity of the brake shoe is increased so as to make a natural frequency a frequency shifted from a frequency generating the "squeal".

However, in accordance with the recent research concerning the "squeal", it has become clear that the "squeal" is hard to be prevented even by applying the measure to each of the brake drum and the brake shoe mentioned above. Accordingly, in a "squeal" generation mechanism in accordance with the recent research, it is considered to be proper that the "squeal" is generated by a coupled vibration between the brake drum and two brake shoes.

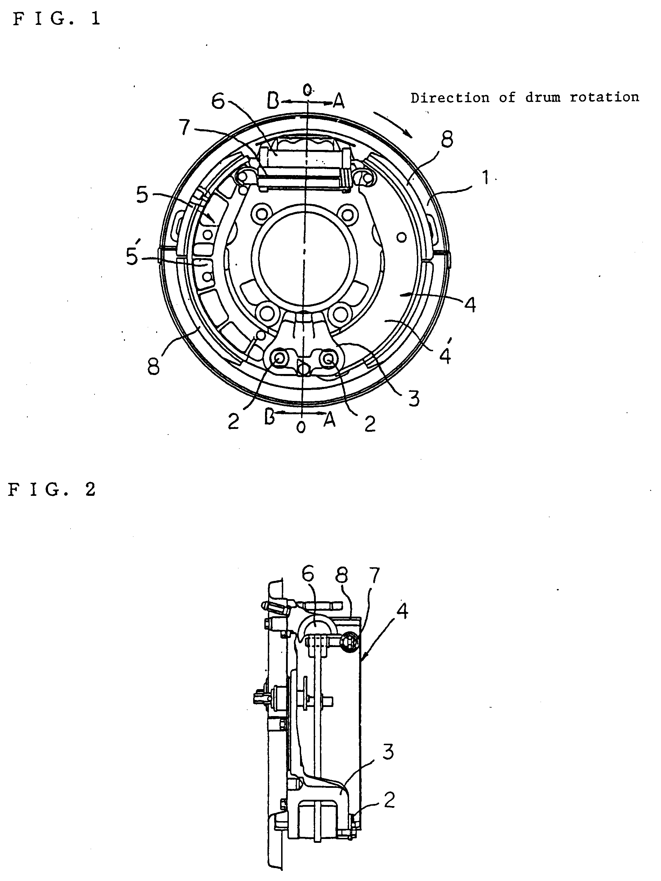

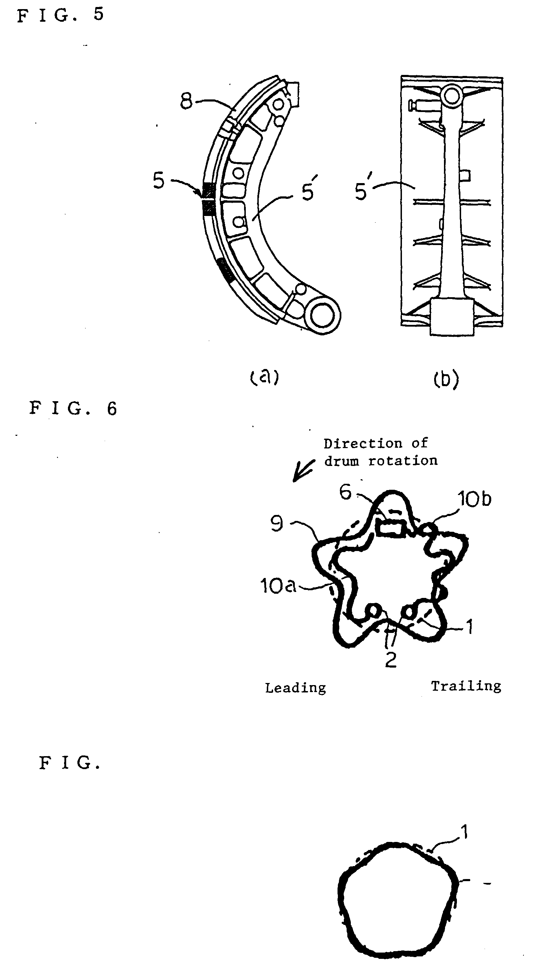

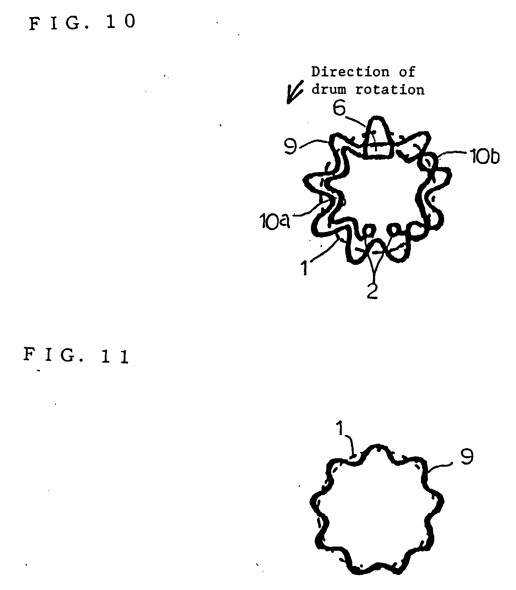

In the case of the drum brake for a vehicle as shown in Figs. 1 to 3, which is structured such as to dispose a pair of brake shoes 4 and 5 having an end rotatably supported to a bracket 3 by a pin 2 within a brake drum 1, to expand the other end of the brake shoes 4 and 5 against a spring 7 by a cylinder 6, and to press a lining 8 adhered to an outer surface of the shoes 4 and 5 to an inner peripheral surface of the brake drum 1, thereby performing a brake action, when the "squeal" is generated, the brake drum 1 vibrates in such a mode as shown in an outside solid line 9 in Figs. 6 and 10, the brake shoes 4 and 5 vibrate in such a mode as shown in an inside solid lines 10a and 10b in Figs. 6 and 10, and a complex vibration of the brake drum 1 and the brake shoes 4 and 5 mentioned above is coupled, so that a so-called coupled vibration is generated. However, since both of the brake drum 1 and the brake shoes 4 and 5 have a great number of natural frequencies generating the coupled vibration mentioned above, in the conventional measure which independently changes the natural frequency with respect to the brake drum 1 or a pair of brake shoes 4 and 5, even when a certain natural frequency generating the "squeal" is changed, the coupled vibration is again generated in the other natural frequency and there is a fear that the "squeal" is generated.

The inventors of this application have found that the "coupled vibration" is hard to be generated in a plurality of natural frequencies including the brake drum and the like by differentiating each of the natural frequencies of a pair of right and left brake shoes which corresponds to one of the factors generating the coupled vibration, as a result of researches, thereby introducing the present invention. Further, as a result of a further research, in order to provide a further practical drum brake for a vehicle which is harder to generate the "squeal" than the conventional one, the present invention has been achieved.

### SUMMARY OF THE INVENTION

An object of a first aspect in accordance with the present invention is to provide a drum brake for a vehicle, in which respective natural frequencies of right and left brake shoes is made different from each other, and a coupled vibration is hard to generate, thereby reducing a change of generating a "squeal".

An object of a second aspect in accordance with the present invention is to provide a drum brake for a vehicle, in which a natural frequency of a trailing shoe is set higher than a natural frequency of a leading shoe, and a coupled vibration is hard to generate, thereby reducing a change of generating a "squeal".

An object of a third aspect in accordance with the present invention is to provide a drum brake for a vehicle, in which a trailing shoe is made of a cast iron having a high natural frequency and a leading shoe is made of a steel plate having a low natural frequency, and a coupled vibration is hard to generate, thereby reducing a change of generating a "squeal", in the same manner as the second aspect of the present invention. Further, in this aspect, when a resonance with the brake drum is generated in the steel plate brake shoe end corresponding to the leading shoe, the vibration of the brake drum itself and the vibration of the steel plate brake shoe through the drum are effectively restricted because the cast iron brake shoe corresponding to the trailing shoe has a great damping force due to a characteristic of the material and has a great specific gravity and a heavy weight.

Further, the other object of the third aspect in accordance with the present invention is to provide a drum brake for a vehicle which can be easily manufactured in the same manner as a normal brake shoe only by changing the material of the brake shoe.

### DISCLOSURE OF THE INVENTION

In accordance with the first aspect in accordance with the present invention, there is provided a drum brake for a vehicle for braking by pressing a pair of brake shoes having the same size to an inner surface of a brake drum, in which the pair of brake shoes are made of materials respectively having a different natural frequency from each other.

In accordance with the second aspect in accordance with the present invention, there is provided a drum brake for a vehicle for braking by pressing a pair of brake shoes having the same size to an inner surface of a brake drum, in which a natural frequency of a brake shoe corresponding to a trailing shoe among the pair of brake shoes is set to be higher than a natural frequency of a brake shoe corresponding to a leading shoe.

In accordance with the second aspect in accordance with the present invention, there is provided a drum brake for a vehicle for braking by pressing a pair of brake shoes having the same size to an inner surface of a brake drum, in which a main body of a brake shoe corresponding to a leading shoe among the pair of brake shoes is made of a steel plate and a main body of a brake shoe corresponding to a trailing shoe is made of a cast iron.

In both of the drum brake for a vehicle in accordance with the present invention, since each of the natural frequencies of the right and left brake shoes are different from each other, the coupled vibration is hard to generate, thereby reducing a chance of generating the "squeal".

### BRIEF DESCRIPTION OF THE DRAWINGS

Fig. 1 is a front elevational view of a drum brake for a vehicle in accordance with the present invention;
Fig. 2 is a schematic view as seen from a direction of an arrow A along a cross section of an O-O line in Fig. 1;
Fig. 3 is a schematic view as seen from a direction of an arrow B along a cross section of an O-O line in Fig. 1;
Figs. 4A and 4B show a brake shoe made of a steel plate, in which Fig. 4A is a bottom elevational view, and Fig. 4B is a side elevational view;
Figs. 5A and 5B show a brake shoe made of a cast iron, in which Fig. 5A is a side elevational view, and Fig. 5B is a bottom elevational view;
Fig. 6 is a schematic view which shows a vibration mode of a brake drum and a pair of brake shoes in the drum brake for a vehicle in accordance with the present invention;
Fig. 7 is a schematic view which shows a vibration mode of a brake drum in order to show a "squeal" prevention effect in the drum brake for a vehicle in accordance with the present invention;
Fig. 8 is a graph which shows a result of a brake noise test in a truck to which the drum brake for a vehicle in accordance with the present invention is attached;
Fig. 9 is a graph which shows a result of a brake noise test in a truck to which the drum brake for a vehicle in accordance with the other art than the present invention is attached;
Fig. 10 is a schematic view which shows a vibration mode of a brake drum and a pair of brake shoes in the drum brake for a vehicle in accordance with the other art than the present invention; and
Fig. 11 is a schematic view which shows a vibration mode of a brake drum in order to show a "squeal" prevention effect in the drum brake for a vehicle in accordance with the other art than the present invention.

### DESCRIPTION OF THE PREFERRED EMBODIMENTS

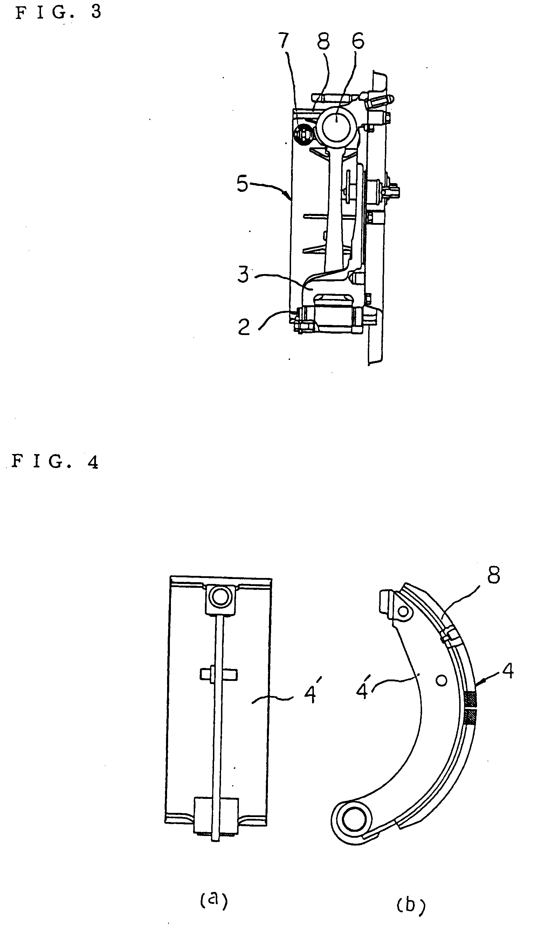

An embodiment of a drum brake for a vehicle in accordance with the present invention will be described in detail with reference to Figs. 1 to 5. In a brake shoe 4 corresponding to a leading shoe with respect to a brake drum 1 rotating in such a manner as shown in an arrow, a main body 4' thereof is made of a steel plate having a relatively low natural frequency as shown in Figs. 2 and 4, and on the contrary, in a brake shoe 5 corresponding to a trailing shoe with respect to a rotation of the brake drum 1, a main body 5' thereof is made of a cast iron having a relatively high natural frequency and a great specific gravity as shown in Fig. 5.

A difference between the natural frequencies of both the brake shoes 4 and 5 is about 15 to 50 %, thereby shifting a peak value of the natural frequency easily generating the "squeal" so as to prevent the "squeal" from generating, and further restrict a resonance due to a coupled vibration in the following manner.

Accordingly, it is the that a work load against a braking force of the leading shoe is generally three times a work load of the trailing shoe, so that the brake shoe 4 corresponding to the leading shoe resonates with the brake drum 1, thereby easily generating the "squeal".

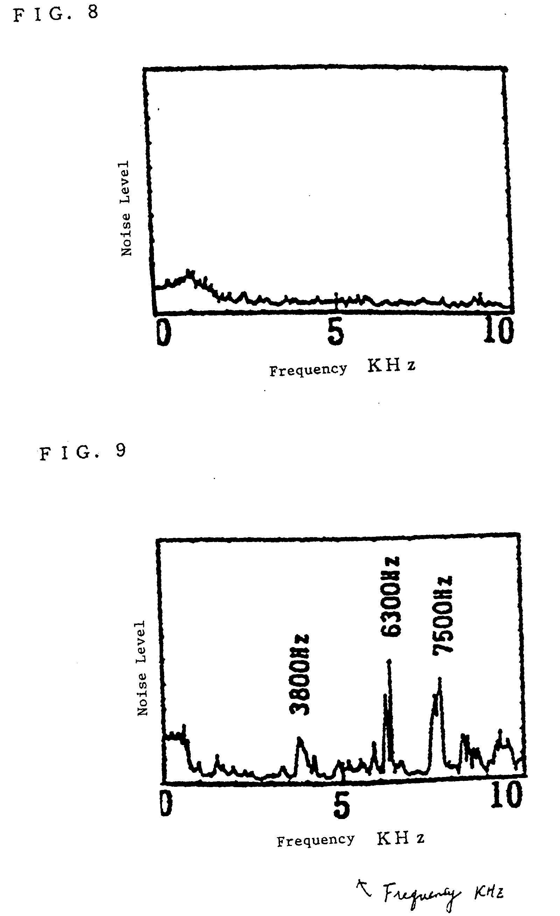

However, in the embodiment mentioned above, the brake drum 1 vibrates in such a manner as shown in a solid line 9, as shown in Fig. 6, and the brake shoe 4 made of a steel plate and the brake shoe 5 made of a cast iron vibrate in such a manner as shown in a solid line 10a and a solid line 10b, respectively. Accordingly, even when the brake shoe 4 made of a steel plate resonates with the brake drum 1, the main body 5' of the cast iron brake shoe 5 is made of a material having a great vibration damping force and having a great specific gravity and a heavy weight, so that both of the vibrations of the brake drum 1 and the vibration of the steel plate brake shoe 4 through the drum 1 can be restricted, thereby preventing the "squeal" due to the resonance from generating. Fig. 7 shows that the vibration wave of the brake drum due to the resonance mentioned above becomes small and that an effect of preventing the "squeal" generation is great.

In this connection, Figs. 10 and 11 show a vibration state of a structure in which the brake shoe (4) corresponding to the leading shoe previously suggested is made of a cast iron and the brake shoe (5) corresponding to the trailing shoe is made of a steel plate. Even when the brake drum (1) vibrates in such a manner as shown in the solid line 9, and the brake shoes (4) and (5) vibrate in such a manner as shown in the solid lines 10a and 10b, respectively so that the cast iron brake shoe (4) resonates with the brake drum (1), the steel plate brake shoe corresponding to the trailing shoe tends to prevent the resonance mentioned above. However, in this case, since the material has a small vibration damping force, and has a small specific gravity and a light weight, the vibration prevention is insufficient, so that the resonance mentioned above can not be prevented. Accordingly, a frequency of the brake drum is widely left as shown in Fig. 11, and an effect of preventing the "squeal" is significantly small.

## Claims

1. A drum brake for a vehicle for braking by pressing a pair of brake shoes having the same size to an inner surface of a brake drum, wherein said pair of brake shoes are made of materials respectively having a different natural frequency from each other.

2. A drum brake for a vehicle for braking by pressing a pair of brake shoes having the same size to an inner surface of a brake drum, wherein a natural frequency of a brake shoe corresponding to a trailing shoe among said pair of brake shoes is set to be higher than a natural frequency of a brake shoe corresponding to a leading shoe.

3. A drum brake for a vehicle for braking by pressing a pair of brake shoes having the same size to an inner surface of a brake drum, wherein a main body of a brake shoe corresponding to a leading shoe among said pair of brake shoes is made of a steel plate and a main body of a brake shoe corresponding to a trailing shoe is made of a cast iron.
